# EUROPÄISCHE PATENTANMELDUNG

(11) **EP 1 160 067 A2**
(43) Veröffentlichungstag der Anmeldung: **05.12.2001**
(21) Anmeldenummer: 01111909.6
(22) Anmeldetag: 17.05.2001
(51) Int. Cl.: B29B 11/16, B29C 70/44

(54) **Vorforming zur Herstellung eines Bauelements aus Faserverbundwerkstoff**

(30) Priorität: 31.05.2000 DE 10027129
(71) Anmelder: Eurocopter Deutschland GmbH, 86609 Donauwörth (DE)
(72) Erfinder: Eschenfelder, Peter, 84778 Waldkraiburg (DE); Oefner, Walter, 83624 Otterfing (DE)
(74) Vertreter: Asch, Konrad, Dipl.-Ing.

(57) **Zusammenfassung**

Die Erfindung betrifft einen Vorformling zur Herstellung eines Bauelements aus Faserverbundwerkstoff, der in ein für ein RTM-Verfahren verwendeten Formwerkzeug einlegbar ist, wobei das Formwerkzeug aus einem eine Metallform bildenden Oberformteil und Unterformteil besteht, die den Vorformling umschließt und der Vorformling mit Harz imprägnierbar und aushärtbar ist.

Aufgabe der Erfindung ist es, bei Herstellung eines Bauelements aus Faserverbundwerkstoff nach dem RTM-Verfahren während des Imprägnierens eines Vorformlings Harzabflüsse aus dem das Bauelement umschließenden Formwerkzeug zu vermeiden.

Die Aufgabe wird gelöst entsprechend den Merkmalen des Anspruchs 1.

## Beschreibung

Die Erfindung betrifft einen Vorformling zur Herstellung eines Bauelements aus Faserverbundwerkstoff, der in ein für ein RTM-Verfahren verwendeten Formwerkzeug einlegbar ist, wobei das Formwerkzeug aus einem eine Metallform bildenden Oberformteil und Unterformteil besteht, die den Vorformling umschließt und der Vorformling mit Harz imprägnierbar und aushärtbar ist.

Das RTM - (resin transfer molding) Verfahren dient der Herstellung eines Bauelements aus Faserverbundwerkstoff. Unter dem Begriff des RTM-Verfahrens ist eine Vielzahl unterschiedlicher Verfahren zusammengefaßt.

Beim RTM-Verfahren ist bekannt ein komplett einen Vorformling umschließendes, abgedichtetes Formwerkzeug. Der Vorformling entspricht der Gestalt des Bauelements. Dickwandige, monolitische Bauelemente bei denen es auf exakte Außenmaße ankommt, werden nach einem RTM-Verfahren hergestellt, welches eine Metallform verwendet. Die Metallform wird aus einem Oberformteil und einem Unterformteil gebildet, die dichtend zusammenfügbar sind. Der Oberformteil und der Unterformteil sowie die Einlegeteile umschließen das Bauelement und ergeben ein geschlossenes und abgedichtetes Formwerkzeug. Die Luft im Formwerkzeug ist mittels eines Anschlußmittels evakuierbar.Das Anschlußmittel ist mit einer Saugeinrichtung und einer Injektionseinrichtung verbunden.Beide Einrichtungen sind steuerbar.

In dieses Formwerkzeug wird der Vorformling, der der Struktur des Bauelements entspricht, eingelegt und anschließend mit Reaktionsharzmasse imprägniert, um dann ausgehärtet zu werden. Die Reaktionsharzmasse ist ein Gemisch aus Harz und Härter und wird nachfolgend kurz "Harz" genannt.

Das Ergebnis ist ein Bauelement aus Faserverbundwerkstoff.

Der Vorformling, in Fachkreisen auch "Preform" genannt, besteht aus Fasermaterial bzw. Lagen von Fasermaterial, die bereits räumlich angeordnet sein können. Sie können auch bereits mit anderen Bauelementen konfektioniert sein.

Die Metallform als Formwerkzeug besteht aus einer Grundplatte, einer sogenannten Glocke und den Einlageteilen, die zwischen Grundplatte und Glocke einlegbar sind und in ihrer Zuordnung die Außenform des Bauelements ergeben. Zwischen Grundplatte und Glocke ist mindestens umfangseitig ein Dichtungsmittel angeordnet, um ein Entweichen des Harzes während der Injektion zu vermeiden. Diese Metallform ist zwischen einer oberen und einer unteren ,beheizbaren Preßplatte einspannbar. Die Metallform ist außerdem notwendig, da beim Injizieren des im flüssigen Zustand gehaltenen Harzes mit hohen Drücken (bis 30 bar) und Temperaturen von etwa 180 °C gearbeitet wird.

Um die homogene Imprägnierung des Vorformlings mit Harz sicher zu stellen, müssen sogenannte Einlageteile zueinander sowie zur Glocke und zur Grundplatte exakt maßhaltig gefertigt sein, so daß zwischen Harzeinlaß auf der einen Seite des Formwerkzeugs und Auslaß auf der gegenüberliegenden Seite des Formwerkzeugs kein Fließkanal entstehen kann. Die Bildung eines solchen Fließkanals wird häufig verursacht durch Maßungenauigkeiten der Einlageteile oder durch Unebenheiten auf der Paßfläche zwischen Grundplatte und Glocke. Diese Maßungenauigkeiten können auch zu Undichtigkeiten am Formwerkzeug trotz Dichtungsmittel führen, so daß es zu unkontrollierten Harzabflüssen kommt. Damit ist keine kontinuierliche und homogene Imprägnierung des Vorformlings sichergestellt.

Aufgabe ist es, bei Herstellung eines Bauelements aus Faserverbundwerkstoff nach dem RTM-Verfahren während des Imprägnierens eines Vorformlings Harzabflüsse aus dem das Bauelement umschließenden Formwerkzeugs zu vermeiden.

Die Aufgabe wird gelöst entsprechend den Merkmalen des Anspruch 1.

Der Vorformling besteht aus Fasermaterial bzw. Lagen von Fasermaterial, die bereits räumlich ausgebildet sein können und mit anderen Bauelementen konfektioniert sein können. Dieser Vorformling ist von einem Umhüllungsmittel umschlossen. Das Umhüllungsmittel hat Anschlußmittel (in der Regel mindestens zwei) , welche verschließbare Öffnungen haben. Das Umhüllungsmittel umschließt den Vorformling vollständig. Eine der beiden verschließbaren Öffnungen des Umhüllungsmittels wird benötigt, um die Luft aus dem Umhüllungsmittel zu evakuieren (zu saugen), damit das Umhüllungsmittel sich formschlüßig an den Vorformling anlegt.

Der Vorformling mit dem ihn umgebenden Umhüllungsmittel wird in das Formwerkzeug eingelegt,wobei vorher die Luft aus dem Zwischenraum zwischen Umhüllungsmittel und Vorformling evakuiert wurde.Das Umhüllungsmittel besteht aus einem kunststoffelastischem Material, welches den Vorformling umschließt, z.B. in schlauchförmiger oder kissenförmiger Gestalt.Es sind auch andere Gestaltungen möglich.Das Umhüllungsmittel kann die Einlegeteile sowohl umschließen als auch nicht umschließen.Das ist wählbar.

Durch den Einsatz eines Umhüllungsmittels ist es nicht mehr notwendig, daß das Formwerkzeug mit einer Dichtung versehen werden muß. Daraus folgt vorteilhafterweise eine wesentlich konstruktiv vereinfachte Bauweise des Formwerkzeuges.

Mit dem Einsatz des Umhüllungsmittels kann die bisherige Verwendung von Trennmittel zwischen Einlegeteilen und Formwerkzeug bzw. zwischen Vorformling und Formwerkzeug entfallen. Das Umhüllungsmittel sichert, daß das Formwerkzeug nicht mit Harz in Berührung kommt. Es wird somit eine weitere Verwendung des Trennmittels hinfällig.
Da das Formwerkzeug nicht mehr mit Harz in Berührung kommt, vereinfacht sich deutlich auch der Aufwand zur nachträglichen Reinigung des Formwerkzeuges. Der bisherige Einsatz von Lösungsmittel zur Entfernung von Harz aus dem Formwerkzeug kann entfallen.

Der Vorformling besitzt mit dem Umhüllungsmittel bereits ein Verpackungsmittel. Der Vorformling ist mittels des Umhüllungsmittels lagerfähig und transportbereit.

Ein Ausführungsbeispiel der Erfindung ist in der Zeichnung dargestellt und im folgenden näher beschrieben.

Es zeigen
- **Figur 1**: Vorformling
- **Figur 2**: Umhüllungsmittel
- **Figur 3**: Vorformling mit Umhüllungsmittel im evakuierten Zustand
- **Figur 4**: Formwerkzeug mit eingelegtem Vorformling und evakuiertem Umhüllungsmittel sowie dazugehörigen Anschlußmitteln
- **Figur 5**: Querschnitt des Formwerkzeuges mit eingelegtem Vorformling und evakuiertem Umhüllungsmittel

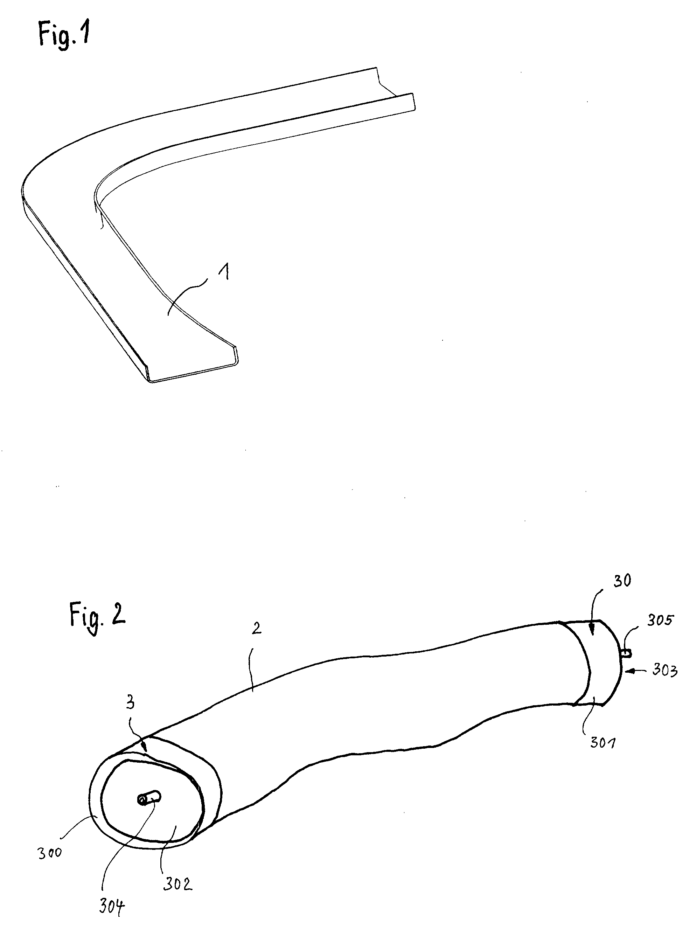

**Figur 1** zeigt einen möglichen Vorformling. Dieser ist U-förmig gestaltet. Das Verfahren läßt jedoch auch andere geometrischen Formen des Vorformling zu. Der Vorformling besteht aus Fasermaterial oder Gewirk. Es besteht keine Einschränkung dieses Fasermaterial oder Gewirk in mehreren Lagen aufeinander anzuordnen. Wie Figur 1 zeigt, kann der Vorformling bereits 3-dimensional geformt sein. Er könnte auch zusätzlich Konfektionierungsteile angeordnet haben.

Der Vorformling 1 widerspiegelt die grundlegende Gestalt des herzustellenden Bauelements. Die Herstellung eines Bauelements in Faserverbundbauweise erfordert neben dem Herstellen des Vorformlings das Imprägnieren des Vorformlings mit Harz und das anschließende Aushärten. Um ein Bauelement im RTM-Verfahren herstellen zu können, wird ein zur Umgebung geschlossenes und abgedichtetes Formwerkzeug benötigt, in welches der Vorformling einlegbar und anschließend mit Harz imprägnierbar ist, um abschließend im Formwerkzeug ausgehärtet zu werden. Der Vorformling 1 kann beispielsweise die Gestalt eines Trägers haben wie er als Bauelement für eine Zellenstruktur im Hubschrauberbau Verwendung finden kann.

**Figur 2** zeigt ein Umhüllungsmittel 2. Die geometrische Gestalt des Umhüllungsmittels 2 ist abhänging von der Geometrie des zu umhüllunden Vorformlings 1. Im Ausführungsbeispiel handelt es sich beim Vormformling 1 um einen rechtwinklig gebogenen U-Träger. Bei einem solchen Vormformling 1 ist ein schlauchförmiges Umhüllungsmittel 2 sinnvoll. Das entspricht einer optimalen Geometrie. Als Material für das Umhüllungsmittel 2 ist vorteilhafterweise ein elastisches Material zweckmäßig. Sehr gute Eignung besitzt eine elastische Kunststoffolie. Die zu einem Schlauch geformte elastische Kunststoffolie ist entlang ihres Umfangs vollständig dicht. An den beiden offenen Enden werden Anschlußmittel 3 und Anschlußmittel 30 angeordnet. Das Anschlußmittel3,30 kann beispielsweise aus einem äußeren Ring 300,301 gebildet werden, der ein Ende der Kunststoffolie umschließt, wobei eine Zylinderscheibe innen in den Ring 302,303 einschiebbar ist, so daß in einer Endstellung die Folie zwischen Ring 300,301 und Zylinderscheibe 302,303 dauerhaft geklemmt ist. Die Zylinderscheibe hat ein Ventil 304,305 angeordnet. Das Umhüllungsmittel 2 gewährleistet, daß kein flüssiges Harz mit dem umgebenden Formwerkzeug in Berührung kommt. Das Anschlußmittel 3 kann beispielsweise mit seinem Ventil 304 an eine Saugeinrichtung und das Anschlußmittel 30 beispielsweise an eine Injektionseinrichtung zur Injektion vom flüßigen Harz angeschlossen werden.

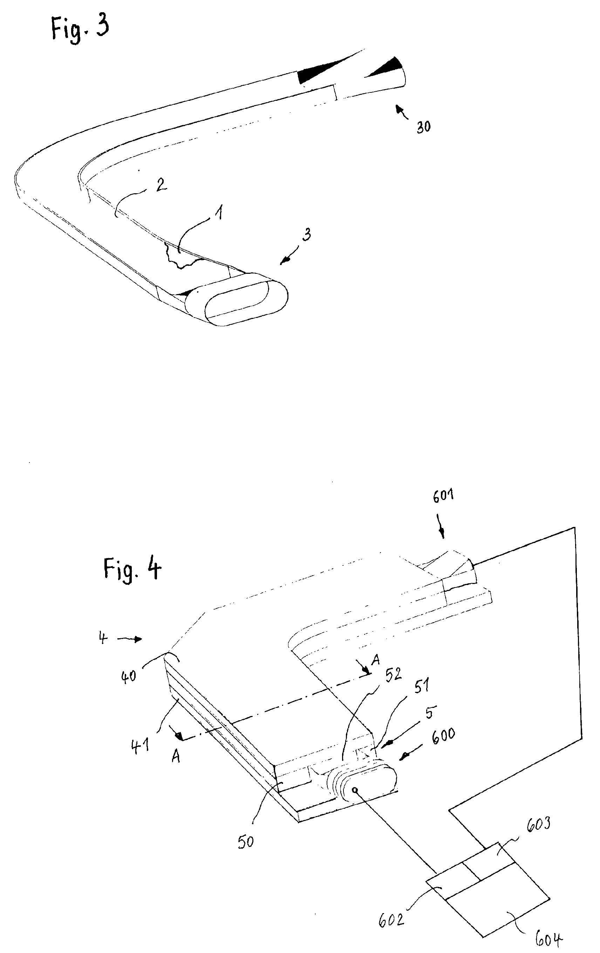

**Figur 3** zeigt den Vorformling 1 mit Umhüllungsmittel 2 in evakuierten Zustand. Der Geometrie des Vorformling 1 folgend ist das Umhüllungsmittel 2 schlauchförmig ausgebildet. Die beiden Enden des Umhüllungsmittels 2 besitzen ein Anschlußmittel 3 und Anschlußmittel 30. Das Umhüllungsmittel 2 sollte sich grundsätzlich der Geometrie des betreffenden Vorformling 1 anpassen. Das Umhüllungsmittel 2 kann kissenförmig und kugelförmig gestaltet sein, d.h. letztlich jede gewünschte geometrische Gestalt verkörpern, die den Vorformling vollständig umschließt. Das Umhüllungsmittel 2 besteht aus einem relativ dünnen, elastischen Material. Das kann beispielsweise eine Kunststoffolie sein. Das Umhüllungsmittel 2 hat mindestens zwei verschließbare Öffnungen, wobei eine mindestens im Anschlußmittel 3 und die andere im Anschlußmittel 30 angeordnet sein kann. Eine der beiden verschließbaren Öffnungen wird benötigt, um die Luft aus dem Umhüllungsmittel 2 zu evakuieren (zu saugen), damit sich das Umhüllungsmittel 2 formschlüßig am Vorformling 1 anlegt. Dies ist notwendig, um den Vorformling 1 im ein Formwerkzeug einlegen zu können. Figur 2 zeigt diesen evakuierten Zustand. Zum besseren Verständnis wurde in Figur 2 bildlich eine Unterbrechung im Umhüllungsmittel 2 gemacht, um den darunterliegenden Vorformling 1 sichtbar zu machen.

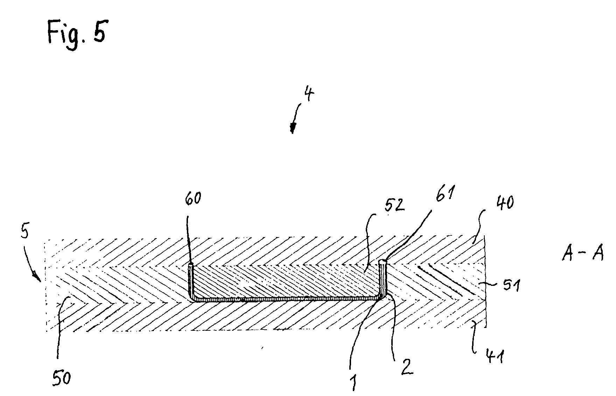

**Figur 4** zeigt ein Formwerkzeug 4 mit eingelegtem Vorformling und evakuiertem Umhüllungsmittel 2 und dem dazugehörigen Anschlußmittel 600, 601.

Anschlußmittel 600 ist beispielsweise mit einer Saugeinrichtung 602 verbunden. Das Anschlußmittel 601 ist über seinen Ventilanschluß mit einer Injektionseinrichtung 603 verbunden. Saugeinrichtung 602 und Injektionseinrichtung 603 werden von einer Steuerung 604 gesteuert. Dabei wird über den Ventilanschluß des Anschlußmittels 601 flüßiges Harz injiziert, welches den Vorformling imprägniert. Das Harz wird dabei von der Saugeinrichtung 602 in Richtung des Anschlußmittels 602 gesaugt, so daß der Vorformling vollständig und homogen mit Harz imprägniert wird.

**Figur 5** zeigt den Querschnitt A-A eines Formwerkzeuges 4 nach Fig. 4. Das Formwerkzeug 4 besteht aus einem Oberformteil 40 und einem Unterformteil 41. Zwischen Oberformteil 40 und Unterformteil 41 befindet sich der Verformling 1 mit Umhüllungsmittel 2. Als Einlegeteile 5 werden verwendet die Seitenteile 50, 51 sowie ein Innenteil 52. Diese Einlegeteile 5 ergeben die Außenform des Vorformlings 1. Anhand Figur 5 ist zu erkennen, daß der Vorformling 1 vollständig von dem Umhüllungsmittel 2 umschlossen ist. Es ist zu erkennen, daß das Umhüllungsmittel 2 auf je einen der beiden U-förmigen Schenkel des Vorformlings 1 je einen Kanal 60, 61 bildet. Der Kanal 60 dient als Vorlauf und ist beispielsweise mit dem Anschlußmittel 600 verbunden. Der Kanal 61 dient als Rücklauf und er ist mit dem Anschlußmittel 601 verbunden. Am Anschlußmittel 600 (Fig.4) wird eine Saugeinrichtung 602 angeschlossen, die das flüssige Harz während des Injektionsvorganges ansaugt. Am Anschlußmittel 601 wird eine Injektionseinrichtung 603 angeschlossen, die das Harz in das Umhüllungsmittel 2 mit Vorformling 1 injiziert.Beide Einrichtungen 602,603 werden von einer Steuerung 604 gesteuert.

Der Vorformling 1 mit Umhüllungsmittel 2 sowie den Einlegeteilen 5 ist zwischen Oberformteil 40 und Unterformteil 41 eingespannt. Beide stehen mit einer Heizung z.B. Elektroheizung in Verbindung, so daß die Wärmeenergie über Oberformteil 40 und Unterformteil auf die Einlegeteile 5 und den Vorformling übertragbar ist. Die Heizung ist während des Injektionsvorganges und dem späteren Aushärtevorgang in Betrieb.

Fig. 5 zeigt, daß eine Dichtung am Formwerkzeug 4 entfallen kann.

## Patentansprüche

1. Vorformling zur Herstellung eines Bauelements aus Faserverbundwerkstoff, der in ein für ein RTM-Verfahren verwendeten Formwerkzeug einlegbar ist, wobei das Formwerkzeug aus einem eine Metallform bildenden Oberformteil und Unterformteil besteht, die den Vorformling umschließt und der Vorformling mit Harz imprägnierbar und aushärtbar ist, **dadurch gekennzeichnet, daß** der Vorformling (1) von einem Umhüllungsmittel (2) umgeben ist, welches Anschlußmittel (3,30) ausgebildet hat.

2. Vorformling nach Anspruch 1, **dadurch gekennzeichnet, daß** er von einem Umhüllungsmittel (2) aus kunststoffelastischem Material umgeben ist.

3. Vorformling nach Anspruch 1, **dadurch gekennzeichnet, daß** er von einem schlauchförmigen Umhüllungsmittel (2) umgeben ist.

4. Vorformling nach Anspruch 1, **dadurch gekennzeichnet, daß** er von einem kissenförmigen Umhüllungsmittel (2) umschlossen ist.

5. Vorformling nach Anspruch 1, **dadurch gekennzeichnet, daß** er mit den Einlegeteilen (5) vom Umhüllungsmittel (2) umschlossen ist.

6. Vorformling nach Anspruch 1, **dadurch gekennzeichnet, daß** er ohne Einlegeteile vom Umhüllungsmittel (2) umschlossen ist.
